# EUROPEAN PATENT SPECIFICATION

(11) **EP 3 064 605 B1**
(45) Date of publication and mention of the grant of the patent: **31.03.2021**
(21) Application number: 16000804.1
(22) Date of filing: 18.05.2012
(51) Int. Cl.: C22F 1/18, C22C 16/00, G21C 3/07

(54) **METHOD OF MAKING A ZIRCONIUM BASED CLADDING TUBE WITH IMPROVED CREEP RESISTANCE DUE TO FINAL HEAT TREATMENT**
VERFAHREN ZUR HERSTELLUNG EINES ZIRKONIUMBASIERTEN HÜLLROHRES MIT VERBESSERTER KRIECHBESTÄNDIGKEIT AUFGRUND EINER ABSCHLIESSENDEN WÄRMEBEHANDLUNG
PROCÉDÉ DE FABRICATION D'UNE TUBE DE GAINAGE À BASE DE ZIRCONIUM AVEC RÉSISTANCE AU FLUAGE AMÉLIORÉE À CAUSE DE TRAITEMENT THERMIQUE FINAL

(30) Priority: 16.06.2011 US 201113161563
(43) Date of publication of application: 07.09.2016
(62) Divisional of application: 12800643.4
(73) Proprietor: Westinghouse Electric Company LLC, Cranberry Township, PA 16066 (US)
(72) Inventor: Foster, John P., Bluffton, SC 29909 (US); Colburn, David, Ogden, UT 84403 (US); Comstock, Robert, Irwin, PA 15642 (US); Cook, Terrence, Riverdale, UT 84405 (US); Dahlback, Mats, 72476 Vasteras (SE); Garde, Anand, Columbia, SC 29229 (US); Jourdain, Pascal, 72243 Vasteras (SE); Kesterson, Ronald, Columbia, SC 29212 (US); McClarren, Michael, New Alexandria, PA 15670 (US); Lynn Svec Nuhfer, Dianna, Pittsburgh, PA 15238 (US); Pan, Guirong, Sumter, SC 29150 (US); Partezana Mundorff, Jonna, Finleyville, PA 15332 (US); Hsiang, Ken Yueh, Charlotte, NC 28277 (US); Boshers, James A., deceased (US); File, Penney, Lusby, MD 20657 (US)
(74) Representative: Gallo, Wolfgang

(56) References cited:
- EP-A1- 1 225 243
- WO-A1-2004/040587
- US-A1- 2010 128 834
- JUNG Y I ET AL: "Behavior of a recrystallization in HANA-4 and HANA-6 zirconium-based alloys", JOURNAL OF ALLOYS AND COMPOUNDS, ELSEVIER SEQUOIA, LAUSANNE, CH, vol. 479, no. 1-2, 24 June 2009 (2009-06-24), pages 423-426, XP026108849, ISSN: 0925-8388, DOI: 10.1016/J.JALLCOM.2008.12.089 [retrieved on 2008-12-30]
- JUNG Y I ET AL: "Effect of Cr on the creep properties of zirconium alloys", JOURNAL OF NUCLEAR MATERIALS, ELSEVIER BV, NL, vol. 396, no. 2-3, 31 January 2010 (2010-01-31), pages 303-306, XP026832981, ISSN: 0022-3115 [retrieved on 2009-10-29]
- SHISHOV V N ET AL: "Structure-phase state, corrosion and irradiation properties of Zr-Nb-Fe-Sn system alloys", ASTM INTERNATIONAL. JOURNAL, ASTM INTERNATIONAL, US, vol. 5, no. 3, 1 March 2008 (2008-03-01), XP009183355, ISSN: 1546-962X, DOI: 10.1520/JAI101127
- SEIBOLD A ET AL: "Influence of composition and condition on In-PWR behavior of Zr-Sn-Nb-FeCrV alloys", ASTM SPECIAL TECHNICAL PUBLICATION, PHILADELPHIA, PA, US, no. 1423, 1 January 2002 (2002-01-01), pages 743-757, XP009183356, ISSN: 0066-0558

## Description

### BACKGROUND OF THE INVENTION

### 1. Field of the Invention

The present invention generally relates to a method of making a zirconium based cladding tube for use in nuclear fuel reactor assemblies. Specifically, the invention relates to new technology that improves the in-reactor creep of Zr-Nb based alloys by an essential and critical final heat treatment.

### 2. Description of the Prior Art

In the development of nuclear reactors, such as pressurized water reactors and boiling water reactors, fuel designs impose significantly increased demands an all of the fuel components, such as cladding, grids, guide tubes, and the like. Such components are conventionally fabricated from zirconium-based alloys commercially titled ZIRLO, that contain about 0.5-2.0 wt.% Nb; 0.9-1.5 wt.% Sn; and 0.09-0.11 wt.% of a third alloying element selected from Mo, V, Fe, Cr, Cu, Ni, or W, with the rest Zr, as taught in U.S. Patent Specification No. 4,649,023 (Sabol et al.*).* That patent also taught compositions containing up to about 0.25 wt.% of the third alloying element, but preferably about 0.1 wt.%.

There have been increased demands on such nuclear core components, in the form of longer required residence times and higher coolant temperatures, both of which cause increase alloy corrosion. These increased demands have prompted the development of alloys that have improved corrosion and hydriding resistance, as well as adequate fabricability and mechanical properties. Further publications in this area include U.S. Patent specifications 5,940,464; 6,514,360 (Mardon et al. and *Jeong et al)* and Reexamination Certificate U.S. 5,940,464 C1 (both *Mardon et al.),* and the paper "Advanced Cladding Material for PWR Application: AXIOM™, Pan et al., Proceedings of 2010 LWR Fuel Performance/Top Fuel/WRFPM, Orlando, FL 09/26-29/2010 ("technical paper").

*Mardon et al* taught zirconium alloy tubes for forming the whole or outer portion of a nuclear fuel cladding or assembly guide tube having a low tin composition: 0.8-1.8 wt. % Nb; 0.2-0.6 wt. % Sn, 0.02-0.4 wt. % Fe, with a carbon content of 30-180 ppm, a silicon content of 10-120 ppm and an oxygen content of 600-1800 ppm, with the rest Zr. *Jeong et al* taught a niobium containing zirconium alloy for high burn-up nuclear fuel application containing Nb, Sn, Fe, Cr, Zr with possible addition of Cu. The *Pan et al.* "technical paper" lists alloys listed as X1, X4, X5, XSA, but deliberately only very generally describes the actual composition weight percentages, being very vague in this regard. *Pan et al* reports tensile strength, elongation and creep test data, and shows micrographs and in-reactor corrosion and oxide thickness data.

Sabol et al. in "In-Reactor Corrosion Performance of ZIRLO and Zircaloy-4," Zirconium in the Nuclear Industry: Tenth International Symposium, A.M. Garde and E.R. Bradley Eds., American Society for Testing and Materials, ASTM STP 1245, Philadelphia 1994, pp. 724-744, demonstrated that, in addition to improved corrosion performance, ZIRLO material also has greater dimensional stability (specifically, irradiation creep and irradiation growth) than Zircaloy-4. More recently, U.S. Patent Specification No. 5,560,790 (Nikulina et al.) taught zirconium-based materials having high tin contents where the microstructure contained Zr-Fe-Nb particles. The alloy composition contained: 0.5-1.5 wt. % Nb; 0.9-1.5 wt. % Sn; 0.3-0.6 wt. % Fe, with minor amounts of Cr, C, O and Si, with the rest Zr.

*Foster et al.,* in United States Patent 5,125,985, presents a straight forward method of controlling the creep by use of the final area reduction and intermediate anneal temperature. A decrease in final area reduction decreases creep, and an increase in intermediate anneal temperature decreases creep. In different applications, the in-reactor creep can be more important than in-reactor corrosion. One such example is fuel rods containing fuel pellets coated with ZrB₂. ZrB₂ is a neutron absorber. When neutrons are absorbed, He gas is released which increases the rod internal pressure. In this case, creep resistant cladding is necessary so that the fuel/cladding gap remains closed. A closed fuel/cladding gap ensures that the fuel temperatures do not increase due to the formation of a He gas gap between the fuel and cladding. The new technology presented below in the Summary of the Invention will show that the cladding in-reactor creep may be improved by the final heat treatment.

Thus, there continually remains a vital need, even in this late stage of nuclear power development, for novel zirconium cladding alloys that exhibit improved in-reactor irradiation creep resistance over known alloys in the field. And, as can be seen, these cladding art patents and papers provide an extremely compact art area, where only very minor changes have shown, after extended testing, major and dramatic improvements. Thus, minor improvements can easily establish patentability in this specific area. WO2004/040587 A1 discloses a method of producing a cladding tube for nuclear fuel for a nuclear pressure water reactor.
Y. I. Jung et al. "Behavior of a recrystallization in HANA-4 and HANA-6 zirconium-based alloys", JOURNAL OF ALLOYS AND COMPOUNDS, vol. 479, no. 1-2, 24 (2009), pg. 423-426 is a study on recrystallization of melted, hot-rolled and cold rolled-strips of zirconium-based alloys HANA-4 (Zr-1.5Nb-0.4Sn-0.2Fe-0.1Cr) and HANA-6 (Zr-1.1Nb-0.05Cu) by measuring their micro-Vickers hardness and utilizing an optical microscopy as well as transmission electron microscopy.

Y. I. Jung et al. "Effect of Cr on the creep properties of zirconium alloys", JOURNAL OF NUCLEAR MATERIALS, vol. 396, no. 2-3 (2010) pg. 303-306 is a study of the effect of the Cr element in zirconium-based alloy (Zr-1.2Nb-0.1Cr, Zr-1.2Nb-0.5Cr, Zr-1.2Nb-0.3Sn-0.1Cr, and Zr-1.2Nb-0.2Sn-0.3Cr) sheets with partially and fully recrystallized microstructures on the creep properties, where the alloy sheets were manufactured by melting, hot-rolling, cold-rolling three times (sheets being intermediately annealed) and final annealing.

Accordingly, an object of the present invention is to provide a method of making a zirconium based cladding tube with improved in-reactor irradiation creep resistance.

### SUMMARY OF THE INVENTION

According to the present invention, this object is achieved by a method as defined in claim 1, providing unexpected results in respect of in-reactor irradiation creep resistance through the selection of a specific Zr-Nb alloy and a specific combination of final heat treatment.

### BRIEF DESCRIPTION OF THE DRAWINGS

FIG. 1 is a graph depicting the oxide thickness due to corrosion versus the room temperature yield stress and associated final alloy microstructure of 0.77 Low-Sn ZIRLO;
FIG.2 is a graph depicting the oxide thickness due to corrosion versus the room temperature yield stress and the associated final alloy microstructure of Standard ZIRLO;
FIG. 3 is a graph depicting the in-reactor irradiation creep rate versus the room temperature as-fabricated yield stress and the associated final alloy microstructure of 0.77 Sn ZIRLO;
FIG.4 is a graph depicting oxide thickness due to corrosion as a function of the bum-up for Standard ZIRLO, Optimized ZIRLO and Alloys X1, X4 and X5;
FIG. 5A is a process flow diagram of a method for forming zirconium alloy tubing;
FIG. 5B is a process flow diagram of a method for forming zirconium alloy strips.

### DESCRIPTION OF THE PREFERRED EMBODIMENTS

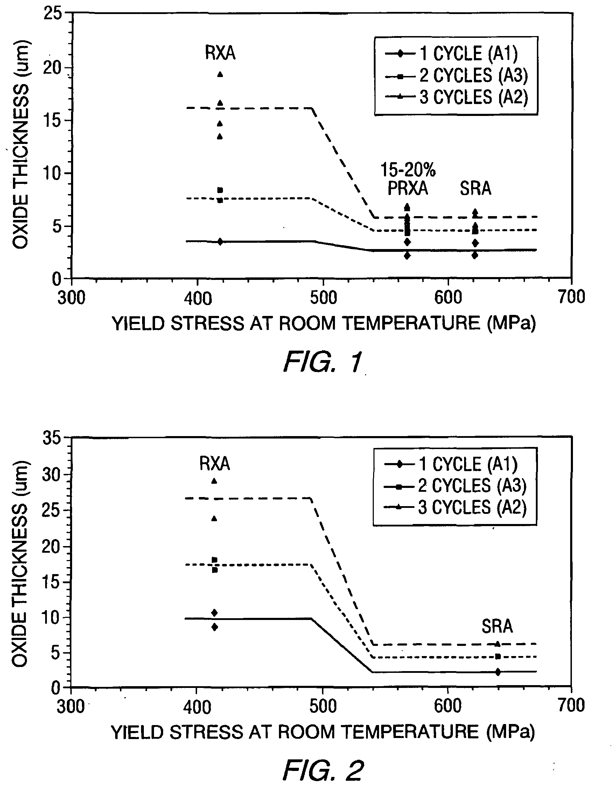

Referring now to the drawings; FIG. 1 very importantly shows that the oxide thickness depends an the final heat treatment. Figure 1 presents the corrosion of 0.77 Sn ZIRLO. All of the cladding was fabricated from the same ingot and received identical processing except for the final heat treatment. The cladding was given three final heat treatments of SRA, PRXA and RXA. The highest corrosion (highest oxide thickness) was exhibited by cladding with the RXA - fully recrystallized - final heat treatment. Significantly lower corrosion was exhibited by cladding with both SRA and PRXA (15% to 20%) final heat treatments.

FIG. 2 very importantly shows the in-reactor oxide thickness corrosion data for Standard ZIRLO (1.02 weight % Sn) irradiated for 1, 2 and 3 cycles in the Vogtle Unit 2 PWR. All of the cladding was fabricated from the same ingot and received identical processing except for the final heat treatment. The cladding was given 2 different final anneal heat treatments of SRA and RXA. FIG. 2, very importantly, shows that the oxide thickness depends on the final heat treatment as exhibited by the 0.77 weight % Sn ZIRLO data in FIG. 1. The highest corrosion (highest oxide thickness) was exhibited by cladding with the RXA final heat treatment. Significantly lower corrosion was exhibited by cladding with the SRA final heat treatment.

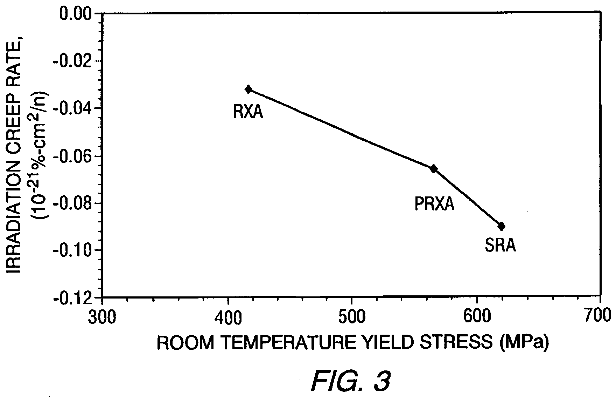

As discussed above, depending on the application, improved in-reactor creep resistance can be as important as improved corrosion resistance. The in-reactor creep is also dependent on the final heat treatment. FIG. 3, very importantly, presents the in-reactor steady state creep rate for 0.77 weight % Sn ZIRLO (which is Claim 1 of this invention) irradiated for 1, 2 and 3 cycles in the Vogtle Unit 2 PWR (see paragraph 6).

FIG. 3 shows that the highest in-reactor creep resistance (that is, the lowest in-reactor creep rate) is exhibited by cladding with a RXA final heat treatment. The lowest in-reactor creep resistance (that is, the highest in-reactor creep rate) is exhibited by cladding with a SRA final heat treatment. Intermediate in-reactor creep resistance is exhibited by the PRXA final heat treatment. Thus, both SRA and PRXA are effective in this regard with RXA the best.
Hence, the effect of final heat treatment on in-reactor creep is opposite that of in-reactor corrosion. As a result, the cladding may be optimized for either maximum improved in-reactor corrosion resistance with a SRA or PRXA (15-20% RXA) final heat treatment, or maximum improved in-reactor creep resistance with a final PRXA (80-95% RXA) or RXA heat treatment.

In more substantial detail, each of these "terms," RXA, PRXA, SRA, etc. is defined as:
- SRA means - heat treatment where the microstructure is stress-relief annealed.
- RXA means - heat treatment where the microstructure is fully recrystallized.
- PRXA (15-20% RXA) means - heat treatment where 15-20% of the microstructure is recrystallized and 80-85% of the microstructure is stress relief annealed.
- PRXA (80-95% RXA) means - heat treatment where 80-95% of the microstructure is recrystallized and 5-20% of the microstructure is stress relief annealed.

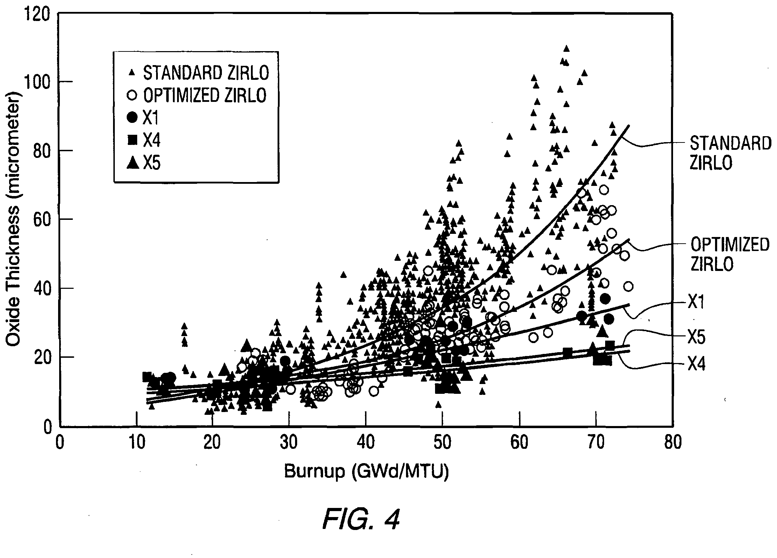

Note that the above SRA, PRXA and RXA designations represent more detailed descriptions of the final heat treatment process methods. It should be clear that this art area is not an area in patent filing where broad conclusions are suggestive of improved alloys within broad ranges; where, for example, 0.4 to 1.5 weight percent niobium and 0.1 to 0.8 weight percent tin, should be considered taught or obvious in view of a teaching of 0.0 to 3.0 weight percent niobium and 0.1 to 3.5 weight percent tin. As shown in FIG. 4 , standard Zirlo compared to compositions X4 and X5 shows the dramatic difference a few tenths of weight percent elements make in this area:

| Standard Zirlo: | 0.5-2 wt % Nb; | 0.9-1.5 wt. % Sn |
|---|---|---|
| X4: | 1 wt. % Nb; | 0 wt. % Sn, etc. or |
| X5: | 0.7 wt. % Nb; | 0.3 wt. % Sn, etc.; |

where these seemingly reduced and very important minor changes in component elements provide extraordinarily improved oxide thickness. Specifically, at a burnup of 70 GWd/MTU, the oxide thickness is reduced at least by a factor of 3.5.

FIG. 4, very dramatically, illustrates at 75 GWd/MTU a range of oxide thickness of about 35-40 micrometer for alloy X1, and a range of about 16 to 26 micrometers for alloys X4 and X5, all showing critical improvements relative to standard ZIRLO.

The present disclosure includes providing a zirconium based alloy for use in an elevated temperature environment of a nuclear reactor, the alloy having 0.2 to 1.5 weight percent niobium, 0.01 to 0.6 weight percent iron, and additional alloy elements selected from 0.0 to 0.8 weight percent tin, 0.0 to 0.5 weight percent chromium, 0.0 to 0.3 weight percent copper, 0.0 to 0.3 weight percent vanadium, 0.0 to 0.1 weight percent nickel, the remainder at least 97 weight percent zirconium, including impurities. Further descriptions of vastly improved alloys follow.

Alloy X4: A zirconium based alloy (denoted as Alloy X4) for use in an elevated temperature environment of a nuclear reactor has 0.6 to 1.5 weight percent niobium, 0.02 to 0.3 weight percent Cu, 0.01 to 0.1 weight percent iron, 0.15 to 0.35 weight percent chromium, the balance at least 97 weight percent zirconium, including impurities.

Alloy X5: A zirconium based alloy (denoted as Alloy X5) has 0.2 to 1.5 weight percent niobium, 0.25 to 0.45 weight percent iron, 0.05 to 0.4 weight percent tin, 0.15 to 0.35 weight percent chromium, 0.01 to 0.1 weight percent nickel, the balance at least 97 weight percent zirconium, including impurities.

Alloy X1: A zirconium-based alloy (denoted as Alloy X1) has 0.4 to 1.5 weight percent niobium, 0.05 to 0.4 weight percent tin, 0.01 to 0.1 weight percent iron, 0.02 to 0.3 weight percent copper, 0.12 to 0.3 weight percent vanadium, 0.0 to 0.5 weight percent chromium, the balance at least 97 weight percent zirconium, including impurities.

Alloy X6: A zirconium based alloy (denoted as Alloy X6 and referred to as "Optimized" ZIRLO), shown in FIG. 4, has 0.4 to 1.5 weight percent niobium, 0.1 to 0.8 weight percent tin, 0.01 to 0.6 weight percent iron, 0.0 to 0.5 weight percent chromium, the balance at least 97 weight percent zirconium, including impurities. This alloy is still vastly superior to standard ZIRLO.

The final heat treatment of Alloy X1 is PRXA (-'80% RXA), which is associated with maximum, improved (low) in-reactor creep resistance. In addition, note that the corrosion resistance of Alloy X1 is significantly increased relative to Standard ZIRLO, by a factor of 2.2 at a bum-up of 70 GWd/MTU (see FIG. 4), because of decreased Sn and the addition of Cu. Further, if the amount of RXA in the PRXA final heat treatment of Alloy X1 is decreased to about 15-20%, the corrosion resistance of Alloy X1 would be further improved.

The final heat treatment of Alloy X4 is PRXA (-80% RXA) which is associated with maximum improved in-reactor creep resistance. At a burn-up of 70 GWd/MTU, the corrosion resistance of Alloy X4 is increased be a factor of about 3.5 (see FIG. 4) relative to Standard ZIRLO. Note that the corrosion resistance of Alloy X4 is significantly increased relative to Standard ZIRLO because of decreased Sn and the additions of Cu and Cr. In addition, if the amount of RXA in the PRXA final heat treatment of Alloy X4 is decreased to about 15-20% PRXA (15-20% RXA), the corrosion resistance of Alloy X4 would by further improved.

The final heat treatment of Alloy X5 is PRXA (-50% RXA), which is considered to be intermediate between maximum improved in-reactor creep resistance and maximum improved in-reactor corrosion resistance. Fig. 4 shows that at a burn-up of 70 GWd/MTU, the corrosion resistance of Alloy X5 is increased be a factor of about 3.0 relative to Standard ZIRLO. Note that the corrosion resistance of Alloy X5 is significantly increased relative to Standard ZIRLO because of decreased Sn, increased Fe and the addition of Cr.

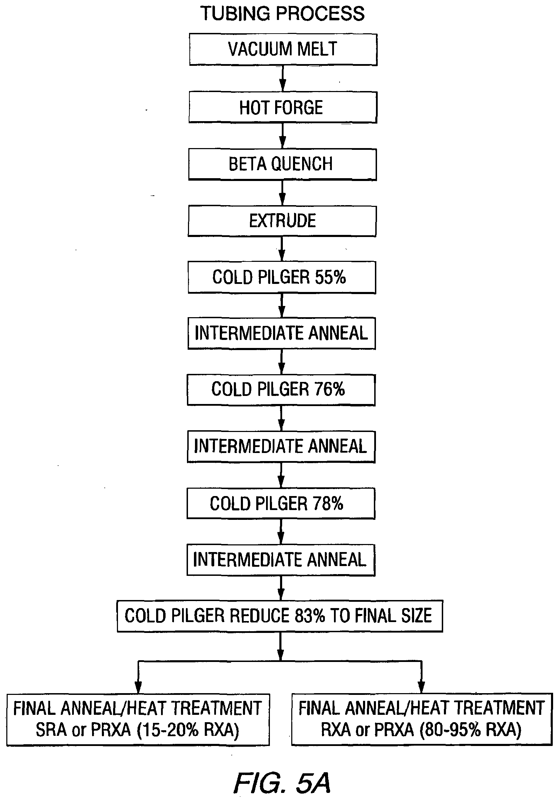

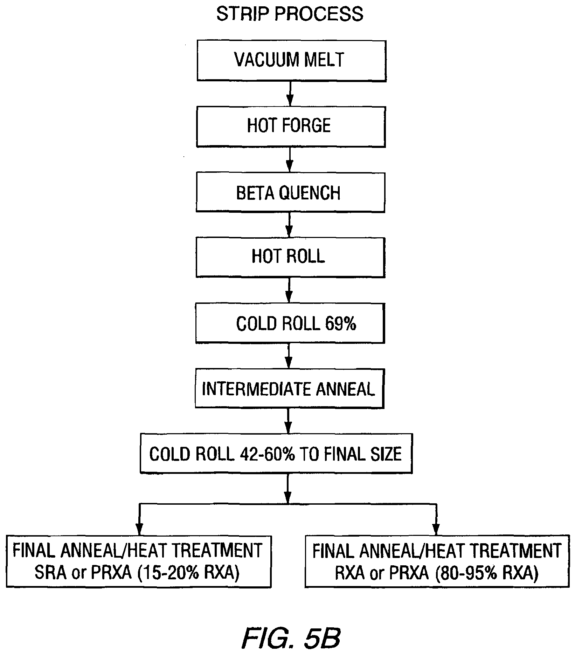

A sequence of steps for forming a cladding, strip, tube or like object known in the art from an alloy of the present invention is shown in FIGS. 5A and 5B. To create tubing for cladding, as shown in FIG. 5A, compositional zirconium based alloys were fabricated from vacuum melted ingots or other like material known in the art. The ingots were preferably vacuum arc-melted from sponge zirconium with a specified amount of alloying elements. The ingots were then forged into a material and thereafter β-quenched. β-quenching is typically done by heating the material (also known as a billet) up to its β-temperature, between around 1273 to 1343 K. The quenching generally consists of quickly cooling the material by water. The β-quench is followed by extrusion. Thereafter, the processing includes cold working the tube-shell by a plurality of cold reduction steps, alternating with a series of intermediate anneals at a set temperature. The cold reduction steps are preferably done on a pilger mill. The intermediate anneals are conducted at a temperature in the range of 516 to 607 °C (960 to 1125 °F). The material may be optionally re-β-quenched prior to the final and formed into an article therefrom. The final heat treatment discussed previously is also shown.

For tubing, a more preferred sequence of events after extrusion includes initially cold reducing the material in a pilger mill, an intermediate anneal with a temperature of about 554 to 607 °C (1030 to 1125 °F), a second cold reducing step, a second intermediate anneal within a temperature range of about 554 to 577 °C (1030° to 1070 °F), a third cold reducing step, and a third intermediate anneal within a temperature range of about 554 to 577 °C (1030° to 1070 °F). The reducing step prior to the first intermediate anneal is a tube reduced extrusion (TREX), preferably reducing the tubing about 55%. Subsequent reductions preferably reduce the tube about 70-80%.

Each reduction pass on the pilger mill is preferred to reduce the material being formed-by at least 51%. The material then preferably goes through a final cold reduction. The material is then processed with a final anneal at temperatures from about 427 to 704 °C (800-1300 °F).

To create strip, compositional zirconium based alloys were fabricated from vacuum melted ingots or other like material known in the art. The ingots were preferably arc-melted from sponge zirconium with a specified amount of alloying elements. The ingots were then forged into a material of rectangular cross-section and thereafter β-quenched. Thereafter, the processing as shown in FIG. 5B, includes a hot rolling step alter the Beta quench, cold working by one or a plurality of cold rolling and intermediate anneal steps, wherein the intermediate anneal temperature is conducted at a temperature from about 960-1105 °F. The material then preferably goes through a final pass and anneal, wherein the final anneal temperature is in the range of about 800-1300 °F. The final heat treatment discussed previously is also shown.

A more preferred sequence to create the alloy strip includes an intermediate anneal temperature within a range of about 1030 to 1070 °F. Further, the pass on the mill preferably reduces the material being formed by at least 40%.

The corrosion resistance was found to improve with intermediate anneals also that were consistently in the range of 960-1105 °F, most preferably around 1030-1070 °F, as opposed to typical prior anneal temperatures that are above the 1105 °F for at least one of the temperature anneals. The preferred composition of alloys, further discussed below, are shown in Table 2. The ranges of the compositions are presented in Table 3.

**Table 2.**

| Alloy | Preferred Composition, by weight percentage |
|---|---|
| X1 | Zr-0.7Nb-0.3Sn-0.12Cu-0.18V -0.05Fe |
| X1 | Zr-1.0Nb-0.3Sn-0.12Cu-0.18V-0.05Fe |
| X1+Cr | Zr-0.7Nb-0.3Sn-0.12Cu-0.18V-0.05Fe-0.2Cr |
| X1+Cr | Zr-1.0Nb-0.3Sn-0.12Cu-0.18V-0.05Fe-0.2Cr |
| X4 | Zr-1.0Nb-0.05Fe-0.25Cr-0.08Cu |
| X5 | Zr-0.7Nb-0.3Sn-0.3Fe-0.25Cr-0.05Ni |
| X6 | Zr-1.0Nb-0.65Sn-0.1Fe |
| X6+Cr | Zr-1.0Nb-0.65Sn-0.1Fe-0.2Cr |

**Table 3.**

| Alloy | Composition Ranges, by weight percentage |
|---|---|
| X1 | Zr;0.4-1.5Nb; 0.05-0.4Sn; 0.01-0.1Fe; 0.02-0.3Cu; 0.12-0.3V |
| Xl-Cr | Zr;0.4-1.5Nb; 0.05-0.4Sn; 0.01-0.1Fe; 0.02-0.3Cu; 0.12-0.3V; 0.05-0.5Cr |
| X4 | Zr;0.6-1.5Nb; 0.01-0.1Fe; 0.02-0.3Cu; 0.15-0.35Cr |
| X5 | Zr;0.2-1.5Nb; 0.05- 0.4Sn; 0.25-0.45Fe; 0.15-0.35Cr; 0.01-0.1Ni |
| X6 | Zr;0.4-1.5Nb; 0.14-0.8Sn; 0.01-0.6Fe |
| X6+Cr | Zr;0.4-1.5Nb; 0.1-0.8Sn; 0.01-0.6Fe; 0.05-0.5Cr |

The invention uses a low-tin ZIRLO alloy designated as Alloy X6 ("Optimized Zirlo"). FIG. 4 shows that the corrosion in-reactor resistance of Alloy X6 is increased by a factor of 1.5 relative to Standard ZIRLO. The reduction of tin increases the corrosion resistance. Tin, however, increases the in-reactor creep strength, and too small an amount of tin makes it difficult to maintain the desired creep strength of the alloy. Thus, the Optimum tin of this alloy must balance these two factors. As a result, the invention uses a low-tin alloy essentially containing, by weight percent, 0.4 - 1.5% Nb; 0.1 - 0.8% Sn, 0.01 - 0.6% Fe, and the balance at least 97% Zr, including impurities, hereinafter designated as Alloy X6. A preferred composition of Alloy X6 has weight percent ranges of about 1.0% Nb, about 0.65% Sn, about 0.1% Fe, and at least 97% Zr, including impurities.

Tin may be decreased if other alloy elements are included to replace the strengthening effect of tin. A second preferred embodiment of Alloy X6 ("Optimized Zirlo") has generally the same weight percentages plus 0.05-0.5% Cr, hereinafter designated as Alloy X6+Cr. A preferred embodiment of Alloy X6+Cr has about 1.0% Nb, about 0.65% Sn, about 0.1% Fe and about 0.2% Cr.

While a full and complete description of the invention has been set forth in accordance with the dictates of the patent statutes, it should be understood that modifications can be resorted to without departing from the the scope of the appended claims. For example, the time for the intermediate anneals can vary widely.

## Claims

1. A method of making a zirconium based alloy cladding tube which exhibits improved creep resistance for use in an elevated temperature environment of a nuclear reactor, the method comprising the steps:
(a) vacuum melting ingots, the ingots comprising:
0.4 to 1.5 weight percent niobium;
0.1 to 0.8 weight percent tin;
0.01 to 0.6 weight percent iron,
optionally, 0.05 to 0.5 weight percent chromium and
a balance of at least 97 weight percent zirconium including impurities, wherein the impurities are less than 0.006 weight percent;
(b) forging the melted ingots to produce an alloy;
(c) beta-quenching the alloy;
(d) extruding the alloy;
(e) cold pilgering the alloy to reduce by 55%;
(f) annealing at a temperature from 554 to 607 °C (1030 to 1125 °F) to produce an annealed alloy;
(g) conducting a second cold pilgering step to reduce by 70-80%; and conducting a second intermediate anneal at a temperature from 554 to 577 °C (1030 to 1070 °F);
(h) conducting a third cold pilgering step to reduce by 70-80%; and conducting a third intermediate anneal at a temperature from 554 to 577 °C (1030 to 1070 °F); and
(i) subjecting the alloy to a final heat treatment of partial recrystallization at a temperature from 427 to 704 °C (800 to 1300 °F), such that 80% to 95% is recrystallized and 5% to 20% is stress relief annealed .

2. The method of claim 1, including a final cold pilgering reduction step to the final size between the third intermediate anneal and before the final heat treatment.

3. The method of claim 1, wherein the ingots comprise:
1.0 weight percent niobium;
0.65 weight percent tin;
0.1 weight percent iron;
optionally, 0.2 weight percent chromium; and
a balance of at least 97 weight percent zirconium including impurities, wherein the impurities are less than 0.006 weight percent.

4. The method of claim 3, wherein the ingots comprise:
0.2 weight percent chromium.

## Patentansprüche

1. Verfahren zur Herstellung eines Hüllrohrs aus einer Legierung auf Zirkonium-Basis, das eine verbesserte Kriechfestigkeit aufweist, zur Verwendung in einer Hochtemperatur-Umgebung eines Kernreaktors, wobei das Verfahren die Schritte umfasst:
(a) Vakuumschmelzen von Barren, wobei die Barren umfassen:
0,4 bis 1,5 Gewichtsprozent Niob;
0,1 bis 0,8 Gewichtsprozent Zinn;
0,01 bis 0,6 Gewichtsprozent Eisen,
optional 0,05 bis 0,5 Gewichtsprozent Chrom und
einen Rest von zumindest 97 Gewichtsprozent Zirkonium einschließlich Verunreinigungen, wobei die Verunreinigungen weniger als 0,006 Gewichtsprozent ausmachen;
(b) Schmieden der geschmolzenen Barren, um eine Legierung zu erzeugen;
(c) Beta-Abschrecken der Legierung;
(d) Extrudieren der Legierung;
(e) Kaltpilgern der Legierung für eine Reduktion von 55 %;
(f) Tempern bei einer Temperatur von 554 bis 607 °C (1.030 bis 1.125 °F), um eine getemperte Legierung zu erzeugen;
(g) Durchführen eines zweiten Kaltpilgerungs-Schritts für eine Reduktion von 70 bis 80 %; und
Durchführen einer zweiten Zwischen-Temperung bei einer Temperatur von 554 bis 577 °C (1.030 bis 1.070 °F);
(h) Durchführen eines dritten Kaltpilgerungs-Schritts für eine Reduktion von 70 bis 80 %; und
Durchführen einer dritten Zwischen-Temperung bei einer Temperatur von 554 bis 577 °C (1.030 bis 1.070 °F); und
(i) Unterziehen der Legierung einer abschließenden Wärmebehandlung der teilweisen Rekristallisation bei einer Temperatur von 427 bis 704 °C (800 bis 1.300 °F), so dass 80 % bis 95 % rekristallisiert werden und 5 % bis 20 % spannungsarmgeglüht werden.

2. Verfahren nach Anspruch 1, umfassend einen letzten Kaltpilgerungs-Reduktionsschritt auf die endgültige Größe, zwischen dem dritten Zwischentempern und vor der abschließenden Wärmebehandlung.

3. Verfahren nach Anspruch 1, wobei die Barren umfassen:
1,0 Gewichtsprozent Niob;
0,65 Gewichtsprozent Zinn;
0,1 Gewichtsprozent Eisen;
optional 0,2 Gewichtsprozent Chrom; und
einen Rest von zumindest 97 Gewichtsprozent Zirkonium einschließlich Verunreinigungen, wobei die Verunreinigungen weniger als 0,006 Gewichtsprozent ausmachen.

4. Verfahren nach Anspruch 3, wobei die Barren umfassen:
0,2 Gewichtsprozent Chrom.

## Revendications

1. Procédé de fabrication d'un tube de gaine en un alliage à base de zirconium qui montre une résistance améliorée au fluage, pour l'utilisation dans un environnement à température élevée d'un réacteur nucléaire, le procédé comprenant les étapes consistant à :
(a) mettre des lingots en fusion sous vide, les lingots comprenant :
0,4 à 1,5 percent en poids de niobium ;
0,1 à 0,8 percent en poids d'étain ;
0,01 à 0,6 percent en poids de fer,
facultativement 0,05 à 0,5 percent en poids de chrome, et
un reste d'au moins 97 percent en poids de zirconium, y compris les impuretés, les impuretés étant inférieures à 0,006 percent en poids ;
(b) forger les lingots fusés pour produire un alliage ;
(c) soumettre l'alliage à un trempe de phase béta ;
(d) extruder l'alliage ;
(e) soumettre l'alliage à un pèlerinage à froid pour une réduction de 55 % ;
(f) recuire à une température de 554 à 607 °C (1.030 à 1.125 °F) pour produire un alliage recuit ;
(g) effectuer une deuxième étape de pèlerinage à froid pour une réduction de 70 - 80 % ; et
effectuer un deuxième recuit intermédiaire à une température de 554 à 577 °C (1.030 à 1.070 °F) ;
(h) effectuer une troisième étape de pèlerinage à froid pour une réduction de 70 - 80 % ; et effectuer un troisième recuit intermédiaire à une température de 554 à 577 °C (1.030 à 1.070 °F) ; et
(i) soumettre l'alliage à un traitement thermique final de recristallisation partielle à une température de 427 à 704 °C (800 à 1.300 °F), de telle manière que de 80 % à 95 % sont recristallisés et de 5 % à 20 % sont soumis à un recuit léger de détensionnement.

2. Procédé selon la revendication 1, comportant une étape finale de réduction par pèlerinage à froid pour obtenir les dimensions finales, entre le troisième recuit intermédiaire et avant le traitement thermique final.

3. Procédé selon la revendication 1, dans lequel les lingots comprennent :
1,0 percent en poids de niobium ;
0,65 percent en poids d'étain ;
0,1 percent en poids de fer ;
facultativement 0,2 percent en poids de chrome ; et
un reste d'au moins 97 percent en poids de zirconium, y compris les impuretés, les impuretés étant inférieures à 0,006 percent en poids.

4. Procédé selon la revendication 3, dans lequel les lingots comprennent :
0,2 percent en poids de chrome.
